# EUROPÄISCHE PATENTSCHRIFT

(11) **EP 1 777 422 B1**
(45) Veröffentlichungstag und Bekanntmachung des Hinweises auf die Patenterteilung: **14.07.2010**
(21) Anmeldenummer: 06021722.1
(22) Anmeldetag: 17.10.2006
(51) Int. Cl.: F16C 7/02

(54) **Pleuel für eine Doppelkurbelwellen-Kolbenmaschine und Doppelkurbelwellen-Kolbenmaschine**
Connecting rod for a twin crankshaft reciprocating engine and twin crankshaft reciprocating engine
Bielle pour une machine à piston à double vilebrequins et machine à piston à double vilebrequins

(30) Priorität: 20.10.2005 DE 102005050333
(43) Veröffentlichungstag der Anmeldung: 25.04.2007
(73) Patentinhaber: Neander Motors AG, 24143 Kiel (DE)
(72) Erfinder: Betzmeir, Helmut, 85521 Ottobrunn (DE)
(74) Vertreter: Schlimme, Wolfram

(56) Entgegenhaltungen:
- WO-A-90/14185
- WO-A-99/57437
- DE-A1- 19 844 991
- DE-C1- 10 046 214
- GB-A- 464 724
- JP-A- 60 257 938
- US-A- 5 660 086

## Beschreibung

Die Erfindung betrifft ein Pleuel für eine Doppelkurbelwellen-Kolbenmaschine, nach dem Oberbegriff des Patentanspruchs 1. Sie betrifft weiterhin eine Doppelkurbelwellen-Kolbenmaschine.

Bei Kolbenmaschinen mit im Verhältnis zur Bohrung langem Hub müssen auch die Pleuel lang und schmal ausgebildet sein, um nicht mit dem unteren Umfangsrand des Zylinders zu kollidieren. Derartige lange und schmale Pleuel unterliegen jedoch, stärker als breite Pleuel, der Gefahr des Knickens.

Insbesondere dann, wenn die Pleuel für eine Doppelkurbelwellen-Kolbenmaschine vorgesehen sind, bei der die beiden Kurbelwellen bezüglich einer Zylindermittelachse seitlich zueinander versetzt sind, treten die Pleuel unter einem flacheren Winkel von der Seite in den Zylinder ein als bei einer Kolbenmaschine mit nur einer Kurbelwelle, so daß hier die Gefahr der Kollision mit dem unteren Zylinderrand prinzipbedingt erhöht ist. Bei einer Doppelkurbelwellen-Kolbenmaschine müssen die Pleuel daher noch schmaler ausgebildet sein. Im Stand der Technik hat es bereits Überlegungen gegeben, die Pleuel von Doppelkurbelwellen-Kolbenmaschinen gekrümmt auszubilden. Ein derartiges gekrümmtes Pleuel ist beispielsweise aus der DE-AS 1 775 160 bekannt. Derartige gekrümmte Pleuel sind jedoch, insbesondere bei Hochleistungs-Kolbenmaschinen, statisch bedenklich.

Es ist beispielsweise aus der FR-A-1 596 918 auch bekannt, Pleuel mit einem kolbenseitigen schmalen Schaftabschnitt und einem kurbelwellenseitigen breiten Schaftabschnitt auszubilden, wobei die Schaftabschnitte von umlaufenden Stegen, die sich in Richtung der Pleuelaugenachsen erstrecken, begrenzt sind. Diese umlaufenden Stege, die sich über nahezu die gesamte Dicke des Pleuels erstrecken, erhöhen jedoch wiederum die Gefahr, daß das Pleuel mit den Seitenkanten der Stege in Berührung mit dem kreisförmigen unteren Umfangsrand des Zylinders gerät.

Die US-A 5,660,086 offenbart ein Pleuel gemäß dem Oberbegriff des Anspruchs 1.

Die GB-A-464 724 betrifft ein Pleuel, dessen Pleuelschaft einen schmaleren kolbenseitigen Pleuelschaftabschnitt und einen sich von dort kontinuierlich erweiternden kurbelwellenseitigen Pleuelschaftabschnitt aufweist. Der kolbenseitige Pleuelschaftabschnitt nimmt etwa ein Drittel der Länge des Pleuelschafts in Anspruch und der kurbelwellenseitige Pleuelschaftabschnitt erstreckt sich über etwa zwei Drittel der Länge des Pleuelschafts. Ein Übergangsabschnitt zwischen den beiden vorgenannten Pleuelschaftabschnitten ist hier nicht vorgesehen. Bei dieser bekannten Pleuelkonstruktion wird es angestrebt, eine möglichst elastische Anbindung der Pleuelaugen an den Pleuelschaft zu schaffen. Dem Erzielen einer hohen Knicksteifigkeit steht dies entgegen.

Die JP-A-60-2579.38 betrifft ein Blechpleuel, das aus vier Pleuelelementen zusammengesetzt ist, wobei die Trennflächen durch zwei die Pleuellängsachse enthaltende, rechtwinklig zueinander stehende Ebenen gebildet sind. Diese vier Blechpleuelelemente sind über Schweißpunkte miteinander verbunden. Dieses bekannte Pleuel ist somit im Querschnitt kastenförmig ausgebildet, wobei die Seitenwände, die mit Schweißpunkten zusammengeheftet sind, bezüglich der jeweiligen Stirnflächen des Pleuels abgekantet sind. In einem Bereich des Pleuels in der Nähe des zylinderseitigen Pleuelkopfes sind die Seitenfläche zum Zwecke der Gewichtseinsparung weggelassen. Zusätzlich sind im Bereich des Pleuelschafts langlochförmige Durchbrüche vorgesehen, die sich nahezu über die gesamte Länge zwischen den beiden Pleuelköpfen erstrecken. Dieses Pleuel ist aufgrund seiner Leichtbauweise nur für die Übertragung kleinster Kräfte und Biegemomente geeignet. Insbesondere beim Einsatz in einer Doppelkurbelwellen-Kolbenmaschine ist dieses bekannte Pleuel stark knickgefährdet.

Aufgabe der vorliegenden Erfindung ist es, ein gattungsgemäßes Pleuel anzugeben, welches eine hohe Knicksteifigkeit aufweist und unter verhältnismäßig flachem Winkel in den Zylinder eintreten kann, so daß es für den Einsatz in Doppelkurbelwellen-Kolbenmaschinen geeignet ist.

Diese Aufgabe wird durch die im kennzeichnenden Teil des Patentanspruchs 1 angegebenen Merkmale gelöst.

Der Übergang des ersten Pleuelschaftabschnitts in den zweiten Pleuelschaftabschnitt sorgt dafür, daß die Breite des zweiten Pleuelschaftabschnitts bis kurz vor den ersten Pleuelschaftabschnitt ausreichend groß ist, um dadurch eine hohe Knicksteifigkeit im Bereich des zweiten Pleuelschaftabschnitts zu gewährleisten. Die Verjüngung des Pleuelschafts findet somit nur im Bereich des ersten, kolbenseitigen Pleuelschaftabschnitts statt, mit welchem das Pleuel in den Zylinder eintaucht. Dadurch, daß der erste, schmale Pleuelschaftabschnitt im Bereich des Übergangs in den ersten Pleuelkopf schmaler ist als der Außendurchmesser des Pleuelkopfs, wird ebenfalls erreicht, daß die Breite des Pleuelschafts in dem Bereich, der in den Zylinder eintaucht, besonders gering ist, wodurch die Gefahr der Kollision des Pleuels mit dem unteren Zylinderrand deutlich reduziert ist.Die Länge des ersten Pleuelschaftabschnitts ist gleich der Länge oder kürzer als die Länge des zweiten Pleuelschaftabschnitts. Hierdurch wird der Bereich des Pleuels, der in besonderem Maße einer Knickgefahr unterliegt, gegenüber herkömmlichen Pleueln deutlich verkürzt. Im Bereich der Verbindung zwischen dem ersten Pleuelschaftabschnitt und dem zweiten Pleuelschaftabschnitt ist ein Übergangsabschnitt vorgesehen, in welchem die Breite des zweiten Pleuelschaftabschnitts auf die Breite des ersten Pleuelschaftabschnitts in Richtung der Längserstreckung des Pleuelschafts allmählich abnimmt. Die Abknickgefahr des Pleuels im Übergangsabschnitt zwischen dem ersten Pleuelschaftabschnitt und dem zweiten Pleuelschaftabschnitt ist dadurch deutlich herabgesetzt, weil die Seitenkontur des Pleuels in diesem Bereich nicht abrupt, sondern allmählich vom breiteren zweiten Pleuelschaftabschnitt in den schmaleren ersten Pleuelschaftabschnitt übergeht.

Dabei ist es insbesondere von Vorteil, wenn die Breite des ersten Pleuelschaftabschnitts, im Bereich der Nachbarschaft zum Übergangsabschnitt, im wesentlichen der Hälfte der Breite des zweiten Pleuelschaftabschnitts in dessen Nachbarschaft zum Übergangsabschnitt beträgt.

Vorzugsweise ist der erste Pleuelschaftabschnitt an zumindest einer Stirnseite mit einer sich vom ersten Pleuelkopf in Richtung der Längserstreckung des Pleuelschafts erstreckenden Versteifungsrippe versehen, die die Dicke des Pleuelschafts in diesem Bereich vergrößert. Hierdurch wird eine Versteifung des schmalen, ersten Pleuelschaftabschnitts geschaffen, die die Knickgefahr des Pleuels in diesem Bereich deutlich reduziert, insbesondere dann, wenn die Versteifungsrippe auf beiden Stirnseiten des ersten Pleuelschaftabschnitts ausgebildet ist.

Dabei erstreckt sich die Versteifungsrippe in bevorzugter Weise bis in den Übergangsabschnitt, vorzugsweise aber sogar bis in den dem Übergangsabschnitt benachbarten Bereich des zweiten Pleuelschaftabschnitts. Durch das Vorsehen der Versteifungsrippe auch im Übergangsabschnitt wird insbesondere in diesem Bereich die Knickgefahr des Pleuels weiter reduziert. Erstreckt sich die Versteifungsrippe darüber hinaus bis in den zweiten Pleuelschaftabschnitt, so erfolgt eine besonders zuverlässige Überleitung der Biegemomente, die von der Versteifungsrippe aufgenommen werden, in den breiteren zweiten Pleuelschaftabschnitt, wodurch die Gefahr des lokalen Knickens des Pleuels weiter herabgesetzt ist.

Ist der erste Pleuelschaftabschnitt bezüglich einer die Pleuelaugenachsen verbindenden Ebene asymmetrisch mit dem zweiten Pleuelschaftabschnitt verbunden, so ermöglicht diese Ausführungsform, daß das Pleuel in einem noch flacheren Winkel in den Zylinder eingeführt werden kann, indem die Seite des Pleuels, auf der der erste Pleuelschaftabschnitt in den zweiten Pleuelschaftabschnitt mündet, auf der vom unteren Umfangsrand des Zylinders abgewandten Seite des Pleuelschafts gelegen ist.

Das erfindungsgemäße Pleuel weist somit eine verkürzte Knicklänge auf, das heißt, daß der Abschnitt des Pleuels, der besonders knickgefährdet ist, im Verhältnis zur gesamten Längserstreckung des Pleuels zwischen den beiden Pleuelaugenachsen auf jenes Maß minimiert ist, welches unbedingt erforderlich ist, um zu vermeiden, daß das Pleuel bei vorgegebenem Hub-Bohrungs-Verhältnis der Kolbenarbeitsmaschine mit dem unteren Umfangsrand des Zylinders während des Betriebs in Berührung gerät.

Ein besonders vorteilhafter Einsatz des erfindungsgemäßen Pleuels ergibt sich bei einer Doppelkurbelwellen-Kolbenmaschine, wobei diese entweder eine Brennkraftmaschine, ein Kompressor oder eine Pumpe sein kann.

Die Erfindung wird nachfolgend anhand eines Beispiels unter Bezugnahme auf die Zeichnung näher erläutert; in dieser zeigt:
- **Fig. 1**: ein erfindungsgemäßes Pleuel in der Stirnansicht,
- **Fig. 2**: einen Schnitt entlang der Linie II-II in Fig. 1 durch den schmaleren Pleuelschaftabschnitt und
- **Fig. 3**: eine Stirnansicht auf eine Doppelkurbelwellen-Kolbenmaschine unter Verwendung des erfindungsgemäßen Pleuels.

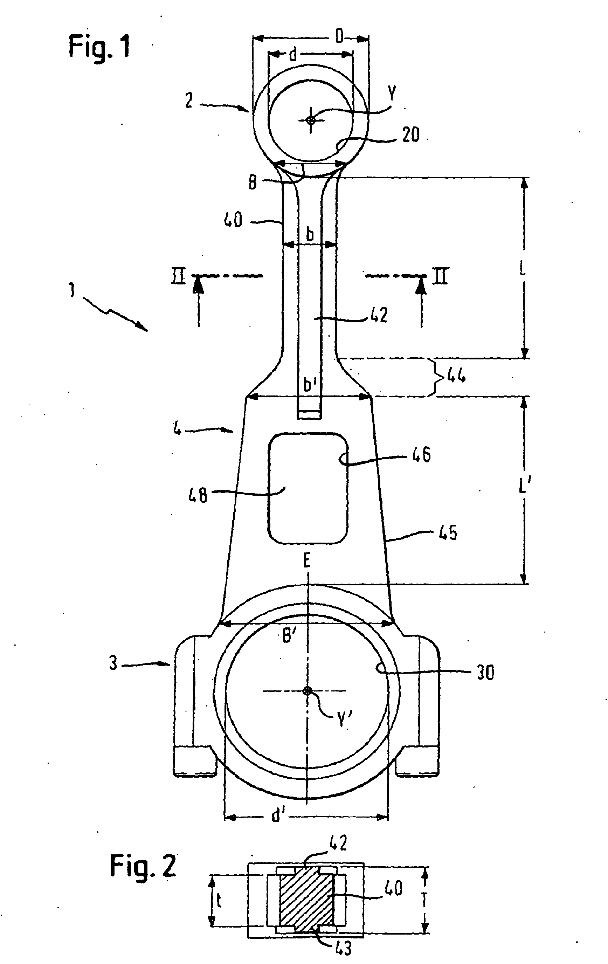

Fig. 1 zeigt die Stirnansicht eines erfindungsgemäßen Pleuels mit Blickrichtung in Richtung der Pleuelaugenachsen Y und Y'. Das Pleuel 1 umfaßt einen ersten Pleuelkopf 2, einen zweiten Pleuelkopf 3 und einen sich zwischen den Pleuelköpfen 2 und 3 erstreckenden Pleuelschaft 4. Im ersten Pleuelkopf 2 ist ein erstes Pleuelauge 20 vorgesehen, mit welchem das Pleuel an einem Kolben einer Kolbenarbeitsmaschine auf herkömmliche Weise schwenkbar angelenkt wird.

Der zweite, in bekannter Weise geteilt oder auch ungeteilt ausgebildete Pleuelkopf 3 weist ein zweites Pleuelauge 30 auf, mit welchem das Pleuel 1 an einem Kurbelzapfen einer Kurbelwelle der Kolbenarbeitsmaschine auf bekannte Weise drehbar angebracht wird.

Der sich zwischen den beiden Pleuelköpfen 2, 3 erstreckende Pleuelschaft 4 umfaßt zwei Pleuelschaftabschnitte 40, 45, die etwa im mittleren Bereich des Pleuelschafts ineinander übergehen. Der erste Pleuelschaftabschnitt 40 ist dem ersten kolbenseitigen Pleuelkopf benachbart, während der zweite Pleuelschaftabschnitt 45 den kurbelwellenseitigen Pleuelkopf 3 benachbart ist.

Die Breite B des ersten Pleuelschaftabschnitts 40 gemessen in einer Richtung rechtwinklig zu einer die Pleuelaugenachsen Y und Y' verbindenden Ebene, also in Fig. 1 von links nach rechts, ist im Bereich des Übergangs vom ersten Pleuelschaftabschnitt 40 in den ersten Pleuelkopf 2 geringer, als der Außendurchmesser D des ersten Pleuelkopfs 2 in derselben Richtung gemessen. Im gezeigten Beispiel ist die Breite B sogar geringer als der Innendurchmesser d des ersten Pleuelauges 20.

Der zweite Pleuelschaftabschnitt 45 ist deutlich breiter als der erste Pleuelschaftabschnitt 40. Die Breite B' des zweiten Pleuelschaftabschnitts 45 ist im Übergangsbereich vom zweiten Pleuelschaftabschnitt 45 in den zweiten Pleuelkopf 3 größer als der Innendurchmesser d' des zweiten Pleuelauges 30. Von dort nimmt die Breite des zweiten Pleuelschaftabschnitts 45 in einem flachen Winkel zu der die Pleuelaugenachsen Y und Y' verbindenden Ebene E in Richtung auf den ersten Pleuelschaftabschnitt 40 hin ab.

Der erste Pleuelschaftabschnitt 40 und der zweite Pleuelschaftabschnitt 45 gehen in einem Übergangsabschnitt 44, der etwa in der Mitte der Längserstreckung des Pleuelschafts 4 liegt, ineinander über. Im Übergangsabschnitt 44 ändert sich die Seitenkontur des Pleuelschafts 4 derart, daß sie einen steileren Winkel zur Ebene E einnimmt, um die unterschiedlichen Breiten der beiden Pleuelschaftabschnitte 40, 45 allmählich ineinander übergehen zu lassen, wobei dieser steilere Winkel im gezeigten Beispiel etwa 45° beträgt.

Der erste Pleuelschaftabschnitt 40 erstreckt sich über seine Länge in nahezu gleichbleibender Breite b, die geringer ist als die Breite B im Bereich des Übergangs in den ersten Pleuelkopf 2. Hingegen reduziert sich, wie bereits ausgeführt worden ist, die Breite des zweiten Pleuelschaftabschnitts vom zweiten Pleuelkopf 3 bis zum Übergangsabschnitt 44. Die Breite b' des zweiten Pleuelschaftabschnitts 45 beträgt an der Grenze zum Übergangsabschnitt 44, die sich durch die Winkeländerung der seitlichen Begrenzungskontur definiert, etwa das Doppelte der Breite b des ersten Pleuelschaftabschnitts.

Die Länge L des ersten Pleuelschaftabschnitts 40, gemessen vom unteren Rand des ersten Pleuelkopfs 2 bis zur Grenze zwischen dem ersten Pleuelschaftabschnitt 40 und dem Übergangsabschnitt 44, die sich durch die Winkeländerung der seitlichen Begrenzungskontur definiert, ist geringer als oder gleich groß wie die Länge L' des zweiten Pleuelschaftabschnitts 45, die gemessen wird vom oberen Rand des zweiten Pleuelkopfs 3 bis zur Grenze zwischen dem zweiten Pleuelschaftabschnitt 45 und dem Übergangabschnitt 44.

Der erste Pleuelschaftabschnitt 40 ist an seiner Oberseite und an seiner Unterseite - bezüglich der Zeichenebene der Fig. 1 - jeweils mit einer sich in Längsrichtung des Pleuelschafts 4 erstreckenden Versteifungsrippe 42, 43 versehen, wie in der Schnittzeichnung gemäß Fig. 2 zu erkennen ist. Die jeweilige Versteifungsrippe 42, 43 erstreckt sich dabei ausgehend vom ersten Pleuelkopf 2 über den Übergangsabschnitt 44 hinaus bis in den zweiten Pleuelschaftabschnitt 45 hinein und endet in dessen Nachbarschaft zum Übergangsabschnitt 44. Auf diese Weise wird die Dicke t des Pleuelschafts 4 im Bereich der Versteifungsrippen 42, 43 zu einer Dicke T vergrößert, wodurch die Biegesteifigkeit des Pleuelschafts 4 im verstärkten Bereich erhöht wird.

Der zweite Pleuelschaftabschnitt 45 kann aus Gründen der Gewichtsersparnis mit einer inneren Ausnehmung 46 versehen sein, die entweder als Durchbruch ausgebildet ist und somit eine Öffnung darstellt oder die als Reduzierung der Dicke t des zweiten Pleuelschaftabschnitts 45 ausgestaltet ist, wobei auf jeder der Stirnseiten eine Ausnehmung vorgesehen ist, zwischen denen jedoch noch eine dünne Wand 48 bestehen bleibt.

Zwar ist das in Fig. 1 gezeigte Pleuel 1 bezüglich des Pleuelschafts 4 symmetrisch zur Ebene E aufgebaut, doch kann der Pleuelschaft 4 auch so ausgestaltet sein, daß der erste Pleuelschaftabschnitt 40 bezüglich der Ebene E seitlich versetzt in den zweiten Pleuelschaftabschnitt 45 übergeht, wodurch ein asymmetrisches Pleuel geschaffen wird.

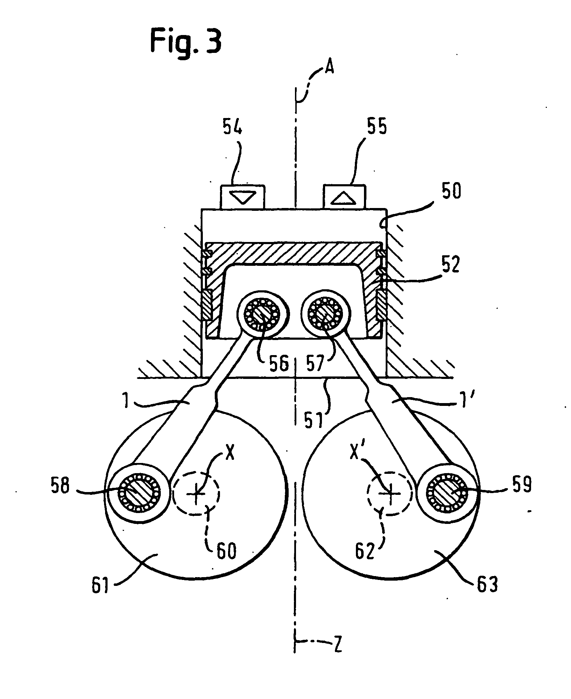

In Fig. 3 ist schematisch eine Stirnansicht auf eine Doppelkurbelwellen-Kolbenarbeitsmaschine gezeigt, die mit Pleueln gemäß der Erfindung versehen ist. In einem Zylinder 50 ist ein Hubkolben 52 hin- und her bewegbar angeordnet. Dabei wird von der Wandung des Zylinders 50 und der oberen stirnseitigen Fläche des Kolbenbodens ein Kompressionsraum umschlossen. In dem Zylinder 50 sind, ebenfalls schematisch dargestellt, ein Einlaßventil 54 und ein Auslaßventil 55 vorgesehen, die den Kompressionsraum mit einem - nicht gezeigten - Einlaßkanal beziehungsweise einem - nicht gezeigten - Auslaßkanal verbinden.

An seinem vom Kolbenboden abgewandten unteren Ende ist der Kolben 52 mit zwei bezüglich der Zylinderachse A seitlich zueinander versetzt gelegenen Pleuelzapfen 56, 57 versehen. Auf jeden der Pleuelzapfen 56, 57 ist ein Lager vorgesehen, auf welchem ein erfindungsgemäßes Pleuel 1, 1' schwenkbar am Hubkolben 52 gelagert ist.

Das zweite Ende eines jeden Pleuels 1, 1' ist an einem zugeordneten Kurbelzapfen 58, 59 drehbar gelagert. Der erste Kurbelzapfen 58 ist dabei an einer mit einer ersten Kurbelwelle 60 verbundenen Kurbelscheibe 61 vorgesehen und der zweite Kurbelzapfen 59 ist an einer mit einer zweiten Kurbelwelle 62 verbundenen Kurbelscheibe 63 vorgesehen. Die erste Kurbelwelle 60 und die zweite Kurbelwelle 62 verlaufen zueinander parallel und drehen sich gegensinnig synchron. Die Drehachsen X, X' der beiden Kurbelwellen 60, 62 verlaufen dabei zu einer Zylinder-Mittelebene Z parallel und sind bezüglich dieser Zylinder-Mittelebene Z seitlich symmetrisch versetzt.

Aus der Fig. 3 wird deutlich, daß das Vorsehen der erfindungsgemäßen Pleuel 1, 1' eine sehr niedrige Bauweise der Doppelkurbelwellen-Kolbenarbeitsmaschine erlaubt, da die Pleuel 1, 1' aufgrund ihres ersten, schmaleren kolbenseitigen Pleuelschaftabschnitts unter einem flacheren Winkel von der Seite in den Zylinder 50 eintauchen können, ohne daß sie mit dem unteren umlaufenden Zylinderrand 51 kollidieren.

Die Erfindung ist nicht auf das obige Ausführungsbeispiel beschränkt, das lediglich der allgemeinen Erläuterung der Erfindung dient. Im Rahmen des Schutzumfangs kann die erfindungsgemäße Vorrichtung vielmehr auch andere als die oben beschriebenen Ausgestaltungsformen annehmen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Pleuel für eine Doppelkurbelwellen-Kolbenmaschine, mit
- einem ersten, ein erstes Pleuelauge (20) aufweisenden Pleuelkopf (2) zur Anbringung des Pleuels (1) an einem Kolben (52) der Kolbenmaschine;
- einem zweiten, ein zweites Pleuelauge (30) aufweisenden Pleuelkopf (3) zur Anbringung des Pleuels (1) an einem Kurbelzapfen (58; 59) einer Kurbelwelle (60; 62) der Kolbenmaschine sowie
- einem den ersten Pleuelkopf (2) und den zweiten Pleuelkopf (3) miteinander verbindenden Pleuelschaft (4),
- wobei der Pleuelschaft (4) einen ersten, schmalen, dem ersten Pleuelkopf (2) benachbarten Pleuelschaftabschnitt (40) aufweist und
- wobei der Pleuelschaft (4) einen zweiten, breiten, dem zweiten Pleuelkopf (3) benachbarten Pleuelschaftabschnitt (45) aufweist,
- wobei der zweite Pleuelschaftabschnitt (45) breiter ist als der erste Pleuelschaftabschnitt (40);
- wobei der erste, schmale Pleuelschaftabschnitt (40) im Bereich des Übergangs in den ersten Pleuelkopf (2) schmaler ist, als der Außendurchmesser (D) des ersten Pleuelkopfs (2);
- wobei die Breite des zweiten Pleuelschaftabschnitts (45) ausgehend vom übergangsbereich vom zweiten Pleuelschaftabschnitt (45) in den zweiten Pleuelkopf (3) in Richtung auf den ersten Pleuelschaftabschnitt (40) beidseitig in einem flachen Winkel zu einer die Pleuelaugenachsen verbindenden Ebene (E) hin abnimmt;
- wobei im Bereich der Verbindung zwischen dem ersten Pleuelschaftabschnitt (40) und dem zweiten Pleuelschaftabschnitt (45) ein Übergangsabschnitt (44) vorgesehen ist;
- wobei die Länge (L) des ersten Pleuelschaftabschnitts (40) gleich der Länge (L') oder kürzer als die Länge (L') des zweiten Pleuelschaftabschnitts (45) ist, und
- wobei der erste Pleuelschaftabschnitt (40) einen Querschnitt aus Vollmaterial aufweist;
**dadurch gekennzeichnet,**
- **dass** die Breite des Pleuelschafts (4) im Übergangsabschnitt (44) von der Breite (b') des zweiten Pleuelschaftabschnitts (45) an der Grenze zum Übergangsabschnitt (44) auf die Breite (b) des ersten Pleuelschaftabschnitts (40) in Richtung der Längserstreckung des Pleuelschafts (4) allmählich abnimmt, wobei die Grenze zum Übergangsabschnitt durch eine Winkeländerung der seitlichen Begrenzungskontur des Pleuelschafts (4) definiert ist.

2. Pleuel nach Anspruch 1,
**dadurch gekennzeichnet,**
**dass** die Breite (b) des ersten Pleuelschaftabschnitts (40), dem Übergangsabschnitt (44) benachbart, im wesentlichen der Hälfte der Breite (b') des zweiten Pleuelschaftabschnitts (45), dem Übergangsabschnitt (44) benachbart, beträgt.

3. Pleuel nach einem der vorhergehenden Ansprüche,
**dadurch gekennzeichnet,**
**dass** der erste Pleuelschaftabschnitt (40) an zumindest einer Stirnseite mit einer sich vom ersten Pleuelkopf (2) in Längsrichtung des Pleuelschafts (4) erstreckenden Versteifungsrippe (42, 43) versehen ist, die die Dicke des Pleuelschafts (4) in diesem Bereich vergrößert.

4. Pleuel nach Anspruch 3,
**dadurch gekennzeichnet,**
**dass** sich die Versteifungsrippe (42, 43) bis in den Übergangsabschnitt (44), vorzugsweise bis in den dem Übergangsabschnitt (44) benachbarten Bereich des zweiten Pleuelschaftabschnitts (45) erstreckt.

5. Pleuel nach einem der vorhergehenden Ansprüche,
**dadurch gekennzeichnet,**
**dass** der erste Pleuelschaftabschnitt (40) bezüglich einer die Pleuelaugenachsen (Y, Y') verbindenden Ebene (E) asymmetrisch mit dem zweiten Pleuelschaftabschnitt (45) verbunden ist.

6. Doppelkurbelwellen-Kolbenmaschine mit zumindest einer Kolben-Zylinder-Einheit mit einem in einem Zylinder (50) hin- und herbewegbaren Kolben (52) sowie zwei gegenläufig synchron zueinander drehenden Kurbelwellen (60, 62), **dadurch gekennzeichnet,**
**dass** der Kolben (52) über ein erstes Pleuel (1) gemäß einem der vorhergehenden Ansprüche mit der ersten Kurbelwelle (60) und über ein zweites Pleuel (1') gemäß einem der vorhergehenden Ansprüche mit der zweiten Kurbelwelle (62) gekoppelt ist.

7. Doppelkurbelwellen-Kolbenmaschine nach Anspruch 6,
**dadurch gekennzeichnet,**
**dass** die Doppelkurbelwellen-Kolbenmaschine eine Brennkraftmaschine ist.

8. Doppelkurbelwellen-Kolbenmaschine nach Anspruch 6,
**dadurch gekennzeichnet ,**
**dass** die Doppelkurbelwellen-Kolbenmaschine ein Kompressor oder eine Pumpe ist.

## Claims

1. A connecting rod for a twin crankshaft piston engine, with
- a first connecting rod head (2) that comprises a first connecting rod eye (20) for mounting the connecting rod (1) to a piston (52) of the piston engine;
- a second connecting rod head (3) that comprises a second connecting rod eye (30) for mounting said connecting rod (1) to the crankpin (58; 59) of a crankshaft (60; 61) of the piston engine; and
- a connecting rod shank (4) that links the first connecting rod head (2) with the second connecting rod head (3),
- the connecting rod shank (4) comprising a first, narrow connecting rod shank section (40) adjacent to the first connecting rod head (2) and
- the connecting rod shank (4) comprising a second, wider connecting rod shank section (45) adjacent to the second connecting rod head (3),
- said second connecting rod shank section (45) being wider than said first connecting rod shank section (40);
- the first, narrow connecting rod shank section (40) being narrower in the region in which it merges with the first connecting rod head (2) than the exterior diameter (D) of the first connecting rod head (2);
- the width of said second connecting rod shank section (45) decreasing on both sides at a flat angle to a plane (E), which links the two axes of the connecting rod eyes, emanating from a transition region, in which the second connecting rod shank section (45) merges into the second connecting rod head (3), in the direction towards said first connecting rod shank section (40);
- wherein provision is made for a transition section (44) in the region in which the first connecting rod shank section (40) and the second connecting rod shank section (45) meet;
- the length (L) of said first connecting rod shank section (40) being equal to or shorter than the length (L') of said second connecting rod shank section (45), and
- said first connecting rod shank section (40) having a cross-section of solid material;
**characterized in that**
- in the transition section (44) the width of the connecting rod shank (4) gradually decreases from the width (b') of the second connecting rod shank section (45), at the boundary to the transition section (44), to the width (b) of the first connecting rod shank section (40), in the direction of the longitudinal extension of the connecting rod shank (4), wherein said boundary to the transition section is defined by a change in angle in the side contour of the connecting rod shank (4).

2. A connecting rod for a piston engine in accordance with claim 1,
**characterized in that**
width (b) of the first connecting rod shank section (40) which is adjacent to the transition section (44) is substantially half as wide as width (b') of the second connecting rod shank section (45) which is adjacent to the transition section (44).

3. A connecting rod for a piston engine in accordance with one of the aforementioned claims,
**characterized in that**
at least one face end of the first connecting rod shank section (40) is provided with a reinforcement rib (42; 43) that extends longitudinally from the first connecting rod head (2) along the connecting rod shank, and which increases the thickness of the connecting rod shank (4) in this section.

4. A connecting rod for a piston engine in accordance with claim 3,
**characterized in that**
the reinforcement rib (42; 43) extends into the transition section (44), preferably into the second connecting rod shank section (45) adjacent to the transition section (44).

5. A connecting rod for a piston engine in accordance with one of the aforementioned claims,
**characterized in that**
the first connecting rod shank section (40) is connected asymmetrically to the second connecting rod shank section (45) in relation to a plane (E) that links the axes of the connecting rod eyes (Y; Y').

6. A twin crankshaft piston engine with at least one piston-cylinder-unit with a piston (52) that can be moved back and forth within a cylinder (50), and with two crankshafts (60, 62) synchronised to rotate in opposite directions to one another,
**characterized in that**
piston (52) is coupled with the first crankshaft (60) via a first connecting rod (1) in accordance with one of the aforementioned claims, and with the second crankshaft (62) via a second connecting rod (1') in accordance with one of the aforementioned claims.

7. A twin crankshaft piston engine in accordance with claim 6,
**characterized in that**
the twin crankshaft piston engine is a combustion engine.

8. A twin crankshaft piston engine in accordance with claim 6,
**characterized in that**
the twin crankshaft piston engine is a compressor or a pump.

## Revendications

1. Bielle pour une machine à pistons à double vilebrequin, comprenant
- une première tête de bielle (2) comportant un premier oeillet de bielle (20) pour le montage de la bielle (1) sur un piston (52) de la machine à pistons ;
- une seconde tête de bielle (3) comportant un second oeillet de bielle (30) pour le montage de la bielle (1) sur un tourillon de vilebrequin (58 ; 59) d'un vilebrequin (60 ; 62) de la machine à pistons, ainsi que
- une tige de bielle (4) qui relie la première tête de bielle (2) et la seconde tête de bielle (3) l'une avec l'autre,
- dans laquelle la tige de bielle (4) comprend un premier tronçon de tige (40) étroit voisin de la première tête de bielle (2), et
- la tige de bielle (4) comprend un second tronçon de tige (45) large voisin de la seconde tête de bielle (3),
- dans laquelle le second tronçon de tige (45) est plus large que le premier tronçon de tige (40) ;
- et le premier tronçon de tige étroit (40) est plus étroit dans la région de la transition vers la première tête de bielle (2) que le diamètre extérieur (D) de la première tête de bielle (2) ;
- dans laquelle la largeur du second tronçon de tige (45), partant de la zone de transition du second tronçon de tige (45) vers la seconde tête de bielle (3), diminue en direction du premier tronçon de tige (14) de part et d'autre sous un angle plat par rapport à un plan (E) qui relie les oeillets de bielle ;
- dans laquelle, dans la région de la liaison entre le premier tronçon de tige (40) et le second tronçon de tige (45), il est prévu un tronçon de transition (44) ; et
- dans laquelle la longueur (L) du premier tronçon de tige (40) est égale à la longueur (L') ou plus courte que la longueur (L') du second tronçon de tige (45), et
- dans laquelle le premier tronçon de tige (40) comprend une section en matériau plein ;
**caractérisée en ce que**
- la largeur de la tige de bielle (4) dans le tronçon de transition (44) diminue progressivement depuis la largeur (b') du second tronçon de tige (45) à la limite vers le tronçon de transition (44) jusqu'à la largeur (b) du premier tronçon de tige (40) en direction de l'extension longitudinale de la tige de bielle (4), et la limite vers le tronçon de transition est définie par une variation angulaire du contour de délimitation latérale de la tige de bielle (4).

2. Bielle selon la revendication 1, **caractérisée en ce que** la largeur (b) du premier tronçon de tige (40) au voisinage du tronçon de transition (44) est sensiblement la moitié de la largeur (b') du second tronçon de tige (45) au voisinage du tronçon de transition (44).

3. Bielle selon l'une des revendications précédentes,
**caractérisée en ce que** le premier tronçon de tige (40) et doté, sur au moins une face frontale, d'une nervure de rigidification (42, 43) qui s'étend depuis la première tête de bielle (2) en direction longitudinale de la tige de bielle (4) et qui augmente dans cette région l'épaisseur de la tige de bielle (4).

4. Bielle selon la revendication 3,
**caractérisée en ce que** la nervure de rigidification (42, 43) s'étend jusque dans le tronçon de transition (44), et de préférence jusque dans la région, voisine du tronçon de transition (44), du second tronçon de tige (45) de la bielle.

5. Bielle selon l'une des revendications précédentes,
**caractérisée en ce que** le premier tronçon de tige (40) est relié au second tronçon de tige (45) de la bielle de manière symétrique par rapport à un plan (E) qui relie les axes (Y, Y') des oeillets de bielle.

6. Machine à pistons à double vilebrequin comprenant au moins une unité à piston-et-cylindre comprenant un piston (52) mobile en va-et-vient dans un cylindre (50), ainsi que deux vilebrequins (60, 62) qui tournent de façon synchrone en sens opposés,
**caractérisée en ce que**
le piston (52) est couplé au premier vilebrequin (60) au moyen d'une première bielle (1) selon l'une des revendications précédentes, et au second vilebrequin (62) au moyen d'une seconde bielle (1') selon l'une des revendications précédentes.

7. Machine à pistons à double vilebrequin selon la revendication 6, **caractérisée en ce que** la machine à pistons à double vilebrequin est un moteur à combustion interne.

8. Machine à pistons à double vilebrequin selon la revendication 6, **caractérisée en ce que** la machine à pistons à double vilebrequin est un compresseur ou une pompe.
